# EUROPEAN PATENT SPECIFICATION

(11) **EP 2 055 617 B1**
(45) Date of publication and mention of the grant of the patent: **20.07.2011**
(21) Application number: 08167591.0
(22) Date of filing: 27.10.2008
(51) Int. Cl.: B62J 1/12

(54) **Vehicle having a boarding detection structure**
Fahrzeug mit einer Einstiegserkennungsstruktur
Véhicule comportant une structure de détection d'embarquement

(30) Priority: 02.11.2007 JP 2007286742
(43) Date of publication of application: 06.05.2009
(73) Proprietor: Honda Motor Co., Ltd., Minato-ku Tokyo 107-8556 (JP)
(72) Inventor: Kanezuka, Masashi c/o HONDA R&D CO., LTD., SAITAMA 351-0193 (JP); Nakajima, Hiroyuki c/o HONDA R&D CO., LTD., SAITAMA 351-0193 (JP); Morikawa, Yuichiro c/o HONDA R&D CO., LTD., SAITAMA 351-0193 (JP)
(74) Representative: Ilgart, Jean-Christophe

(56) References cited:
- JP-A- 1 028 086
- JP-A- 2002 178 814
- US-A1- 2004 035 630

## Description

### Technical Field

The present invention relates to a vehicle having a boarding detection structure which includes seating sensors that detect seating of the rider.

### Background Art

Document JP1028086 discloses a vehicle according to the preamble of claim 1.

In recent years, some vehicles such as motorcycles have a stop-idling function whereby the idling of the engine is stopped when the throttle valve is returned during waiting at a stoplight or the like. In vehicles having this function, a seating sensor that detects seating of the rider is often provided to an occupant seat in which the rider is seated.

A seating sensor detects when the rider is seated in the occupant seat. When the throttle valve is opened to start a vehicle, detection of seating by the seating sensor serves as a condition for starting up the engine.

In a known boarding detection structure for a vehicle, a vehicle having a stop-idling function includes a seating seat in which the rider is seated, and a seating sensor that detects the seating of the rider (see, for example JP-A No. 2000-344164).

In Fig. 4 of Patent Document JP-A- No. 2000-344164, a hinge pin 35 as the center of rotation is mounted to a bracket 33 (reference numerals used in the above publication are also employed herein; the same applies hereinafter) arranged at the front end portion of a storage box 29. A seat 32 is mounted to the hinge pin 35 via a hinge plate 34 in a manner capable of being opened and closed. The hinge pin 35 is urged upward by an arm member 39. Further, a contact-type seat switch 44 is mounted to the bracket 33 via a stay 46, a screw member 47, and a weld nut 48.

When the rider is seated in the seat 32, the seat 32 and the hinge pin 35 descends, causing the arm member 39 urging the hinge pin 35 to descend. As the arm member 39 presses a seat switch 43, the seat switch 43 is turned on, thus detecting the seating of the rider.

In the technique according to Patent Document JP-A-No. 2000-344164, the seat 32 is one in which the rider is seated. In the following, a case is considered in which this technique is applied to a so-called tandem seat in which the rider and the pillion passenger are seated tandem, that is, in the front seat and the rear seat, respectively, and the front and rear seats are formed integrally.

When, for example, only the pillion passenger is seated in the rear seat of the tandem seat, if, due to the structure of the seat bottom plate, the central portion of the seat bottom plate deforms so as to project upward, there is a possibility that the load of the pillion passenger seated in the rear seat is transmitted to the seat switch 43 arranged at the front end portion of the storage box 29, so it may be erroneously detected that the rider is seated.

A technique designed to address the above-mentioned problem has been proposed (see, for example, JP-A No. 2002-29480, Fig 3).

In Fig. 3 of Patent Document JP-A- No. 2002-29480, the seat is a so-called tandem seat having a front seat 20 (reference numerals used in the above publication are also employed herein; the same applies hereinafter) and a rear seat 21 that are integrated together. The seat has a multi-layer structure including a seat bottom plate 26, a lower seat cushion 30, a seat cushion body 27, and a seat skin 28 provided in order from bottom to top.

A seat switch 25 is arranged between the lower seat cushion 30 and the seat cushion body 27. The seat switch 25 is turned on upon elastic deformation due to the seating load, thus detecting the seating of the rider. The seat switch 25 is a paper-like switch.

However, the paper-like seat switch 25 is generally called a pressure-sensitive element switch, and incorporates an element that converts pressure into an electrical signal. As such, the seat switch 25 is expensive in comparison to a typical mechanical switch, and since the seat switch 25 is arranged in the cushion inside the seat, its installation takes time, and care must be taken so as not to affect the cushion performance of the seat.

There is a desire for a technique which is low cost, allows easy seat fabrication, and reliably detects seating of the rider without affecting the cushion performance.

### Problem to be Solved by the Invention

An object of the present invention is to provide a vehicle having a boarding detection structure which is low cost and reliably detects seating of the rider.

### Means for Solving the Problem

An aspect of the invention according to Claim 1 relates to a vehicle having a boarding detection structure including an occupant seat on which a rider and a pillion passenger can be seated tandem and which is formed integrally, and seating sensors that are adapted to detect seating of the rider, wherein the seating sensors comprise a front seating sensor which is arranged below a front end portion of the occupant seat, and two central seating sensors which are arranged below a central portion in a longitudinal direction of the occupant seat, on the left and right in a vehicle width direction, and a bottom plate of the occupant seat is provided with left and right seat supporting portions on which the central seating sensors abut.

In an aspect of the invention according to Claim 2, the central seating sensors are arranged with their actuation directions oriented in a height direction of the vehicle.

In an aspect of the invention according to Claim 3, the central seating sensors are arranged on an inner side with respect to a circumferential edge portion of a storage box provided below the occupant seat, and a contact of each of the central seating sensors is arranged so as to project from an opening formed near the circumferential edge portion.

In an aspect of the invention according to Claim 4, the central seating sensors are each covered by two surfaces formed by a stay member to which each of the central seating sensors is mounted, and a vertical wall provided in the storage box.

In an aspect of the invention according to Claim 5, the three seating sensors are all contact-type switches.

### Brief Description of the Drawings

Fig. 1 is a left side view of a motorcycle provided with an article storing structure.
Fig. 2 is an exploded perspective view of a storage box of the motorcycle and a portion in the vicinity thereof.
Fig. 3 is a sectional view illustrating a front seating sensor arranged at the front end portion of an occupant seat, and a portion in the vicinity thereof.
Fig. 4 is a plan view illustrating central seating sensors arranged at the longitudinally central portion of the occupant seat, and a portion in the vicinity thereof.
Fig. 5 is a view as seen from the arrow 5 of Fig. 4.
Fig. 6 is an exploded perspective view illustrating how a seating sensor is mounted to a stay member.
Fig. 7 is a view illustrating the operation of a vehicle having a boarding detection structure according to the present invention (in a case where the seating sensors are arranged in the front and rear).
Fig. 8 is a view illustrating the operation of a vehicle having a boarding detection structure according to the present invention (in a case where the seating sensors are arranged on the left and right).

### Description of Reference Numerals and Letters

24p... Circumferential edge portion of storage box
65... Opening
70... Contact of seating sensor
52... Occupant seat
52a... Front end portion of occupant seat
52c... Central portion of occupant seat
60... Boarding detection structure for vehicle
63... Seating sensor
72F... Front seating sensor
72L, 72R... Seating sensor
83... Limit switch
D... Rider
P... Pillion passenger.

### Preferred embodiments and effect of the invention

In the related art, in the occupant seat in which the rider and the pillion passenger are seated tandem and which is formed integrally, a paper-like seating sensor that detects seating of the rider on the basis of the seating load is arranged in the front seat in which the rider is seated. However, such a sensor that detects seating on the basis of the seating load is not only expensive but is cumbersome to install and often affects the cushion performance of the seat.

In this regard, according to the present invention, the seating sensors are arranged below the front end portion of the occupant seat and below the vicinity of the longitudinally central portion of the occupant seat. Therefore, boarding of the rider can be detected in a favorable manner even in the case of an occupant seat in which the rider and the pillion passenger are seated tandem and which is formed integrally, while allowing easy seat fabrication and without affecting the cushion performance.

According to the invention, two central seating sensors are arranged on the left and right in a vehicle width direction, and a bottom plate of the occupant seat is provided with left and right seat supporting portions on which the central seating sensors abut. Therefore, when the rider is seated in the occupant seat, the occupant seat abuts on the central seating sensors, thereby detecting the seating by the two central seating sensors arranged on the left and right.

In the related art, seating is often detected in cases such as when, although the rider is seated at the position of the rider's seat, the seating position is displaced to either the left or right side.

In this regard, according to the present invention, two central seating sensors are arranged on the left and right in a vehicle width direction, and left and right seat supporting portions are provided on which the central seating sensors abut. If the rider is determined to be seated only when the seating is detected simultaneously by these central seating sensors, the accuracy with which seating of the rider is detected can be enhanced.

In an aspect of the invention, the seating sensors are arranged with their actuation directions oriented in a height direction of the vehicle. Therefore, by arranging the seating sensors along a vertical wall of the storage box provided below the occupant seat, the seating sensors can be prevented from jutting out toward the front of the vehicle or outward in the vehicle width direction. Since the seating sensors can be prevented from jutting out to the outside of the vehicle, it is possible to arrange the seating sensors compact.

In an aspect of the invention, the seating sensors are arranged on an inner side with respect to a circumferential edge portion of a storage box. Therefore, it is possible to prevent an object or the like from hitting the seating sensors from the side of and above the vehicle. Since it is possible to prevent an object or the like from hitting the seating sensors, the seating sensors can be protected.

In an aspect of the invention, since the seating sensors are each covered by two surfaces formed by a stay member and a vertical wall of the storage box, the seating sensors can be protected.

In an aspect of the invention, the seating sensors are all contact-type switches. Therefore, the structure for detecting the boarding of the rider can be made low cost and highly suitable for general-purpose use. In addition, a further reduction in cost can be achieved due to the commonality of parts.

The best mode for carrying out the present invention will be described below with reference to the attached drawings. In the drawings, "left", "right", "upper", "lower", "front", and "rear" respectively refer to directions as seen from the rider of the vehicle. It should be noted that the drawings are to be seen in the direction of reference numerals.

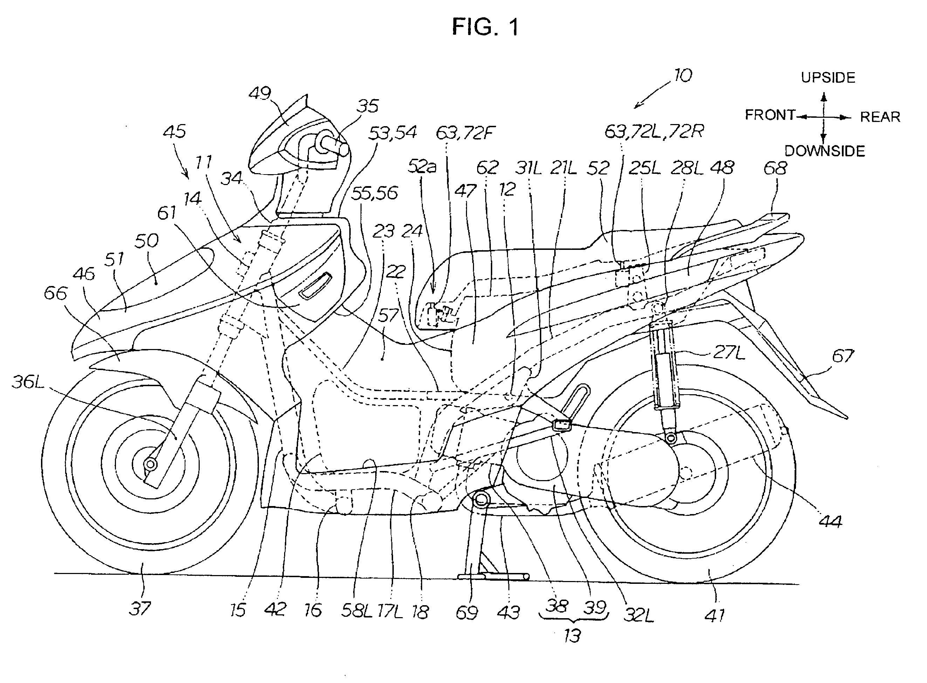

Fig. 1 is a left side view of a motorcycle provided with an article storing structure. A motorcycle 10 including a scooter-type vehicle is a so-called unit swing type vehicle having a body frame 11, and a power unit 13 that is mounted to the body frame 11 in a vertically swingable manner via a pivot point 12.

The body frame 11 includes, as its main components, a head pipe 14 provided at the front end portion of the vehicle, a main frame 15 that is extended obliquely downward toward the rear from the head pipe 14, a first cross frame 16 that is extended horizontally to the left and right at the lower end portion of the main frame 15, left and right lower frames 17L, 17R (only reference numeral 17L in the foreground of the drawing is shown) that are extended outward to the left and right from the lower portion of the main frame 15, and are then respectively extended rearward and supported on the first cross frame 16, a second cross frame 18 passed between the rear end portions of the left and right lower frames 17L, 17R, left and right rear frames 21L, 21R (only reference numeral 21L in the foreground of the drawing is shown) that are erected obliquely upward toward the rear from the lower frames 17L, 17R to be extended to the rear portion of the vehicle and also serve as seat rails, a third cross frame 22 that is arranged forward from the intermediate portions of the rear frames 21L, 21R in a substantially U-shaped configuration in plan view and is passed between the rear frames 21L, 21R, and a center pipe 23 connecting between the main frame 15 and the third cross frame 22.

In the rear portions of the rear frames 21L, 21R, there are arranged storage-box supporting brackets 25L, 25R (only reference numeral 25L in the foreground of the drawing is shown) to which a storage box 24 described later is mounted. In the rear portions of the storage-box supporting brackets 25L, 25R, there are arranged rear cushion bolts 28L, 28R (only reference numeral 28L in the foreground of the drawing is shown) to which rear cushion units 27L, 27R (only reference numeral 27L in the foreground of the drawing is shown) are mounted. Further, the rear frames 21L, 21R are provided with pivot brackets 31L, 31R (only reference numeral 31L in the foreground of the drawing is shown) including the pivot point 12 at which the power unit 13 is supported. Reference numerals 32L, 32R (only reference numeral 32L in the foreground of the drawing is shown) each denote a pillion step frame that supports a pillion passenger step.

A steering shaft 34 is steerably mounted to the head pipe 14. A steering handlebar 35 and front forks 36L, 36R (only reference numeral 36L in the foreground of the drawing is shown) are respectively mounted to the top and bottom of the steering shaft 34. A front wheel 37 is rotatably mounted to the lower end portions of the front forks 36L, 36R.

The power unit 13 includes an engine 38 provided substantially horizontally toward the front, and a transmission unit 39 mounted to the rear portion of the engine 38. A rear wheel 41 as a driving wheel is mounted to the rear end portion of the transmission unit 39.

The rear cushion units 27L, 27R are interposed between the rear end portion of the transmission unit 39 and the intermediate portions of the rear frames 21L, 21R.

A fuel tank 42 is arranged in the area located in front of the engine 38 and surrounded by the main frame 15, the center pipe 23, and the lower frames 17L, 17R. An exhaust pipe 43 is connected to the lower portion of the engine 38. The exhaust pipe 43 is extended rearward and connected to a silencer 44.

The body frame 11 is covered by a body cover 45. A front body cover 46, an intermediate body cover 47, and a rear body cover 48 are arranged in order from the front to the rear. Reference numeral 49 denotes a handlebar cover, and 50 denotes a headlight as an auxiliary part.

The front body cover 46 includes a front cover 51 that constitutes the front surface of the vehicle, a front meter panel 54 as a cover member 53 which is arranged toward an occupant seat 52 side and constitutes a rider's seat, a leg shield 56 as an exterior cover 55 which is arranged continuous to the lower end portion of the front meter panel 54 and covers the feet of an occupant, a tunnel member 57 arranged in rear of the leg shield 56 and arranged between the thighs of the rider, and step floor portions 58L, 58R (only reference numeral 58L in the foreground of the drawing is shown) arranged on the left and right of the tunnel member 57 and serving as footrests for the rider.

The leg shield 56 is provided with a pocket portion 61 that serves as a storage.

The storage box 24 having an opening 62 at the top and serving as a storage is mounted to the storage-box supporting brackets 25L, 25R, and the occupant seat 52 is mounted so as to cover the opening 62 of the storage box 24 in such a way as to allow opening and closing of the opening 62. It should be noted that the occupant seat 52 is a seat on which the rider and the pillion passenger can be seated tandem and is formed integrally.

A front seating sensor 72F serving as a seating sensor 63 which detects the seating of the rider when seated is arranged at the front end portion 52a of the occupant seat 52. Center seating sensors 72L, 72R each serving as the seating sensor 63 which detect the seating of the rider when seated are arranged near the longitudinally central portion of the occupant seat 52. That is, the seating sensors 63 that detect the seating of the rider are provided.

In the drawing, reference numeral 66 denotes a front fender, 67 denotes a rear fender, 68 denotes a grab rail, and 69 denotes a main stand.

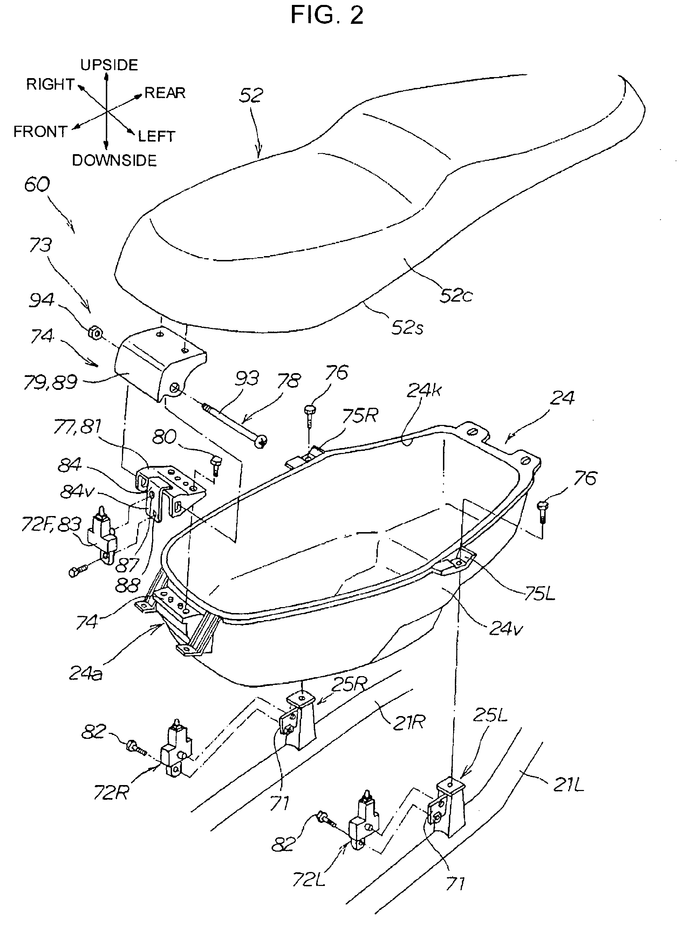

Fig. 2 is an exploded perspective view of the storage box of the motorcycle and a portion in the vicinity thereof, illustrating an overview of a boarding detection structure 60 for a vehicle. The storage-box supporting brackets 25L, 25R that support the storage box 24 are erected from the rear frames 21L, 21R. Plate-like stay members 71, 71 are attached to the storage-box supporting brackets 25L, 25R. Seating sensors 72L, 72R are mounted to the stay members 71, 71.

The storage box 24 has an opening at the top. At a front end portion 24a of the storage box 24, there is formed a front flange 74 to which a hinge portion 73, which supports the occupant seat 52 in a manner capable of being opened and closed, is mounted. Horizontal flanges 75L, 75R mounted to the rear frames 21L, 21R are formed in left and right intermediate portions. The occupant seat 52 is arranged via the hinge portion 73 in a manner capable of being opened and closed, above the opening 24k of the storage box 24. Reference numerals 76, 76 denote fastening members.

The hinge portion 73 includes a stationary portion 77, and a swing portion 79 that is swingably mounted to the stationary portion 77 via a hinge shaft 78. The details of the hinge portion will be described in the next drawing.

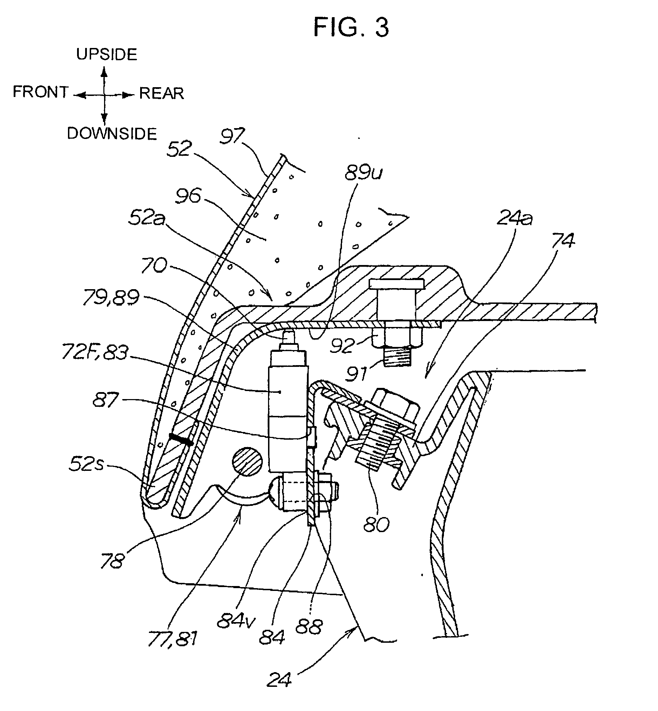

Fig. 3 is a sectional view illustrating the front seating sensor arranged at the front end portion of the occupant seat, and a portion in the vicinity thereof. A storage-box-side bracket 81 as the stationary portion 77 is mounted with a bolt 80 to the front flange 74 constituting the front end portion 24a of the storage box 24. A front stay 84 to which a limit switch 83 as a seating sensor 72F is fixed is mounted to the storage-box-side bracket 81 by welding.

The front stay 84 is a member formed in a substantially L shape as seen in side view. A front positioning hole 87 for fixing the limit switch 83 and a front screw mounting hole 88 are formed in a vertical portion 84v, and the limit switch 83 is mounted along the surface of the vertical portion 84v. That is, the front seating sensor 72F is arranged at the front end portion 52a of the occupant seat 52.

A seat bracket 89 as the swing portion 79 is mounted to a bottom plate 52s of the occupant seat 52 via a bottom plate bolt 91 and a nut 92. The seat bracket 89 is rotatably mounted to the storage-box-side bracket 81 via the hinge shaft 78. The hinge shaft 78 includes a shaft portion 93 and a nut 94.

On a lower surface 89u of the seat bracket 89 which is arranged horizontally, the limit switch 83 is arranged so as to be detected by a contact 70 as a detection portion when the occupant seat 52 is closed and the rider is seated. In the drawing, reference numeral 96 denotes a cushion portion as a component of the occupant seat 52, and 97 denotes a skin portion that covers the cushion portion 96.

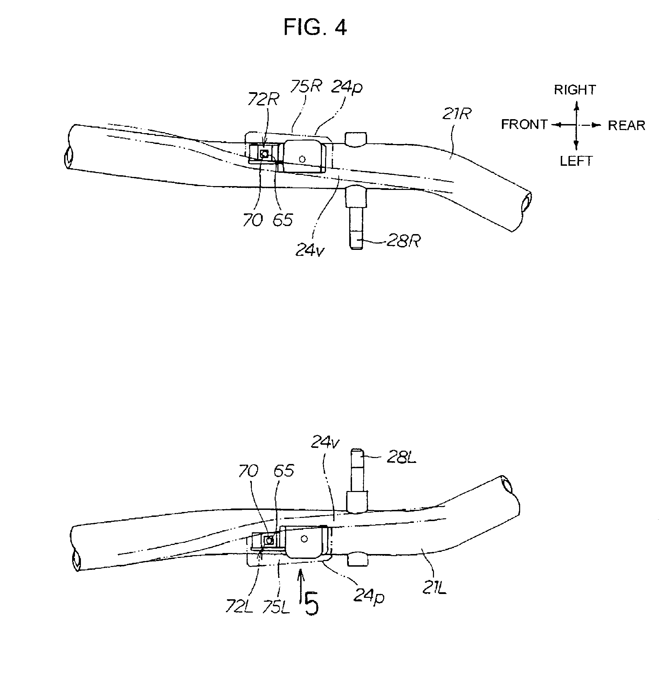

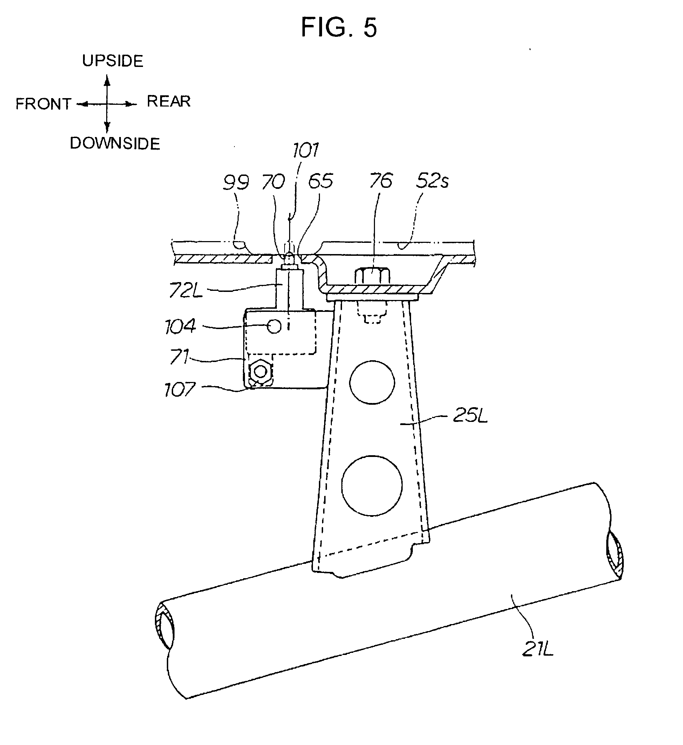

Fig. 4 is a plan view illustrating central seating sensors arranged at the longitudinally central portion of the occupant seat, and a portion in the vicinity thereof. Fig. 5 is a view as seen from the arrow 5 of Fig. 4. In the following, a description will be given while referring to Fig. 4, Fig. 5, and Fig. 2.

The two central seating sensors 72L, 72R, which are arranged below a central portion 52c in the longitudinal direction of the occupant seat 52, are arranged on the left and right in the vehicle width direction. On the vehicle side, there are provided left and right seat supporting portions 99, 99 (only reference numeral 99 in the foreground of the drawing is shown) which support the bottom plate 52s of the occupant seat 52 and on which the central seating sensors 72L, 72R abut.

The central seating sensors 72L, 72R as the seating sensors 72L, 72R are arranged on the inner side with respect to a circumferential edge portion 24p of the storage box provided below the occupant seat. Also, the contacts 70, 70 of the seating sensors 72L, 72R are arranged so as to project from openings 65, 65 formed near the circumferential edge portion 24p, thereby making it possible to prevent an object or the like from hitting the seating sensors 72L, 72R from the side of and above the vehicle. Since it is possible to prevent an object or the like from hitting the seating sensors 72L, 72R, the seating sensors 72L, 72R can be protected.

The seating sensors 72L, 72R are each arranged so that its actuation axis 101 as the actuation direction is oriented in the height direction of the vehicle. Thus, by arranging the seating sensors 72L, 72R along a vertical wall 24v of the storage box provided below the occupant seat 52, the seating sensors 72L, 72R can be arranged in such a way as to prevent them from jutting out toward the front of the vehicle or outward in the vehicle width direction. Since the seating sensors 72L, 72R can be prevented from jutting out to the outside of the vehicle, it is possible to arrange the seating sensors 72L, 72R compact.

Since the seating sensors 72L, 72R are each arranged so that its actuation direction is oriented in the height direction of the vehicle, by arranging the seating sensors 72L, 72R along the vertical wall 24v of the storage box 24 provided below the occupant seat 52, the seating sensors 72L, 72R can be arranged so as not to easily jut out toward the front of the vehicle or outward in the vehicle width direction. Since the seating sensors 72L, 72R do not easily jut out to the outside of the vehicle, it is possible to arrange the seating sensors 72L, 72R compact.

That is, the seating sensors 72L, 72R are each covered by two surfaces formed by the stay members 71, 71 mounted to the seating sensors 72L, 72R, and the vertical walls 24v, 24v provided in the storage box 24, thereby making it possible to protect the seating sensors 72L, 72R.

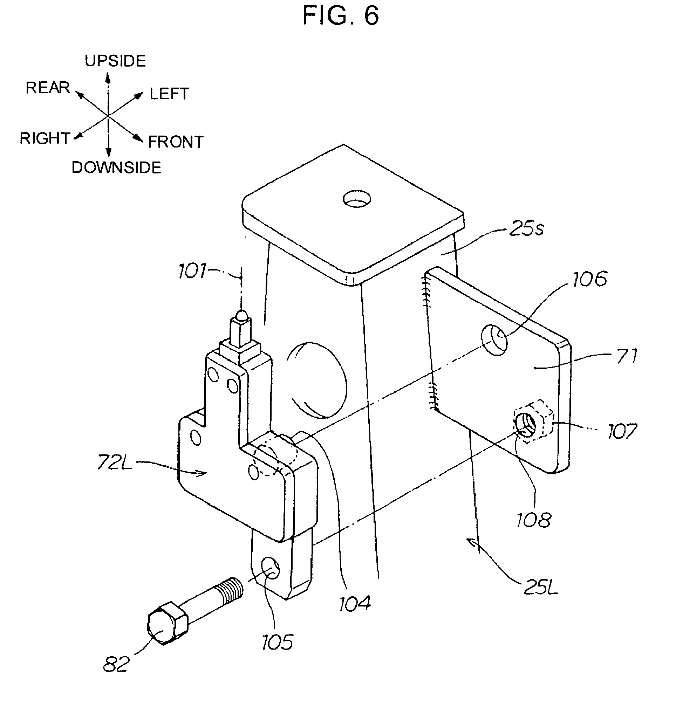

Fig. 6 is an exploded perspective view illustrating how a seating sensor is mounted to the stay member. The plate-like stay member 71 is mounted so as to extend forward from a side wall 25s of the storage-box supporting bracket 25L. The central seating sensor 72L is mounted to the stay member 71 with its actuation axis 101 oriented vertically.

It should be noted that the structure of the storage-box supporting bracket 25R arranged on the right side is the same, so description thereof is omitted.

The central seating sensor 72L is provided with a protrusion 104 that also serves as a positioning portion, and a hole 105 which is arranged below the protrusion 104 and through which a mounting bolt 82 passes. The stay member 71 is provided with a positioning hole 106 that is brought into fitting engagement with the protrusion 104, and a fixing hole 108 which includes a weld nut 107 and through which the mounting bolt 82 is passed and fixed. With the protrusion 104 aligned with the poisoning hole 106, and the hole 105 aligned with the fixing hole 108, the central seating sensor 72L can be mounted to the stay member 71 with the mounting bolt 82.

It should be noted that the mounting structure for the central seating sensor 72R is the same as the above-mentioned mounting structure, so description thereof is omitted.

By employing such a mounting structure, the central seating sensor 72L can be securely mounted to the vehicle side by a simple operation using the single mounting bolt 82.

It should be noted that the front seating sensor 72F has the same structure, and provides the same operation.

The operation of the boarding detection structure for a vehicle mentioned above will be described next.

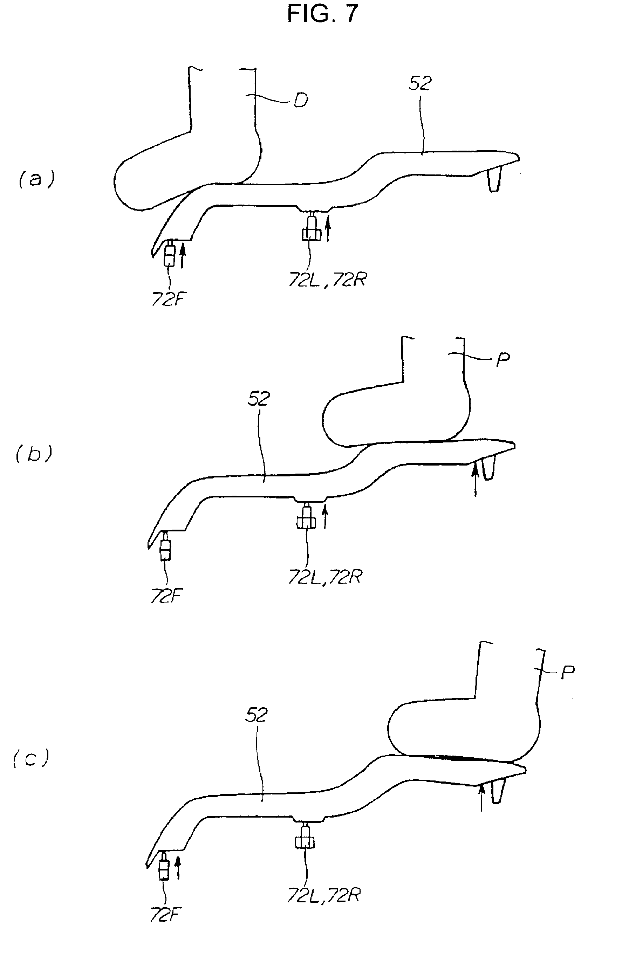

Fig. 7 is a view illustrating the operation of a vehicle having a boarding detection structure according to the present invention (in a case where the seating sensors are arranged in the front and rear), and a description will be given while also referring to Fig. 2.

In Fig. 7(a), a rider D is seated at a predetermined position in the front seat of the occupant seat 52. In this case, the load of the rider D is supported at positions indicated by arrows. Specifically, the load is supported by the front flange 74 arranged at the front end portion of the storage box 24, and the horizontal flanges 75L, 75R mounted from above to the storage-box supporting brackets 25L, 25R arranged at the longitudinally central portion.

At this time, the load of the rider D is detected simultaneously by the front seat sensor 72F and the central seating sensors 72L, 72R, so it is determined that the rider D is seated.

In Fig. 7(b), a pillion passenger P is seated at a predetermined position in the rear seat of the occupant seat 52. In this case, the load of the pillion passenger P is supported at positions indicated by arrows. Specifically, the load is supported by the storage-box supporting brackets 25L, 25R arranged at the longitudinally central portion of the storage box 24, and a rear end portion 24b of the storage box 24.

At this time, since the load of the pillion passenger P is only detected by the central seating sensors 72L, 72R, the rider is not determined as seated.

In Fig. 7(c), a case is considered in which when only the pillion passenger is seated in the rear seat, the seat bottom plate is formed of resin or the like. If, due to some reason, the seat bottom plate deforms so as to protrude upward, there is a possibility that the load of the pillion passenger P seated in the rear seat is supported by the front end portion and rear end portion of the storage box. In this case, the load of the pillion passenger P is detected by the seating sensor 72F arranged at the front end portion of the storage box 24, but not detected by the central seating sensors 72L, 72R. According to the present invention, there is no fear of the rider D being erroneously detected as seated, even when the seat bottom plate deforms so as to protrude upward, and only the pillion passenger P is seated in the rear seat. The above description can be summarized as shown in Table 1.

**Table 1**

| Pattern | Drawing | Front seating sensor | Seating sensor | Seating detection |
|---|---|---|---|---|
| A | Fig. 7(a) | ON | ON | ⊚ |
| B | Fig. 7(b) | OFF | ON | × |
| B | Fig. 7(c) | ON | OFF | × |

Returning to Fig. 7(a), the seating sensors 72F, 72L, 72R are arranged below the front end portion 52a of the occupant seat 52 and below the vicinity of the central portion 52c in the longitudinal direction of the occupant seat. In the occupant seat 52 in which the rider D and the pillion passenger P are seated tandem and which is formed integrally, seating is detected only when seating of the rider D is detected simultaneously by the front seating sensor 72F and the central seating sensors 72L, 72R. Hence, there is no fear that the rider D is erroneously detected as seated when only the passenger P is seated. Since no such erroneous determination is made, it is possible to reliably detect only the seating of the rider D.

Further, the seating sensors 72F, 72L, 72R can be formed at low cost by using, for example, mechanical sensors such as contact-type switches.

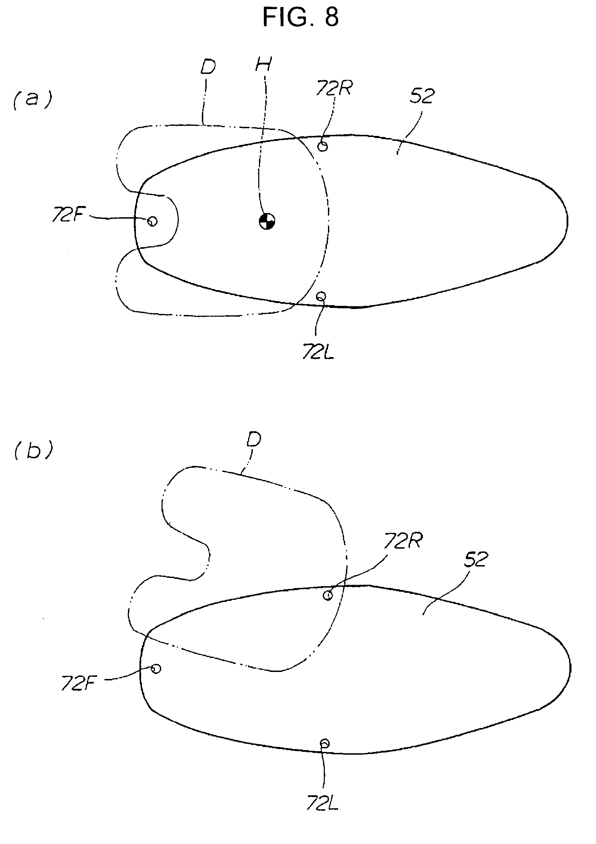

Fig. 8 is a view illustrating the operation of a vehicle having a boarding detection structure according to the present invention (in a case where the seating sensors are arranged on the left and right), and the following description,will be given while also referring to Fig. 2 and Fig. 5.

In Fig. 8(a), the rider D is seated at a predetermined position in the front seat of the occupant seat 52. In this case, the rider D is simultaneously detected by the front seating sensor 72F and the central seating sensors 72L, 72R on the left and right, so it is determined that the driver D is seated. In the drawing, a letter H denotes the hip point of the rider.

In Fig. 8(b), the rider D is seated with his/her hip displaced to the right side. In this case, the rider D is detected by the front seating sensor 72F and the central seating sensor 72R on the right but not detected by the central seating sensor 72L on the left, so the rider is not determined as seated.

The above description can be summarized as Table 2.

Here, while Pattern F in Table 2 shows a case in which the position of the hip of the rider D is displaced to the left side, since this case corresponds to the reverse of Fig. 8(b), description thereof is omitted.

**Table 2**

| Pattern | Drawing | Front seating sensor | Seating sensor | | Seating detection |
|---|---|---|---|---|---|
| | | | Left | Right | |
| D | Fig. 8(a) | ○ | ○ | ○ | ⊚ |
| E | Fig. 8(b) | ○ | × | ○ | × |
| F | - | ○ | ○ | × | × |

Returning to Fig. 8(a), the two central seating sensors 72L, 72R are arranged on the left and right with respect to the vehicle width direction, and left and right seat supporting portions 99, 99 on which the central seating sensors abut are provided on the vehicle side. When the rider D is seated in the occupant seat 52, the central seating sensors 72L, 72R abut on the left and right seat supporting portions 99, 99, thus enabling detection by the two central seating sensors 72L, 72R arranged on the left and right.

In the related art, even when the rider D is seated in a part of the rider's seat, the rider D is often determined as seated in cases such as when the seating position is displaced to the right side.

In this regard, according to the present invention, the two central seating sensors 72L, 72R are arranged on the left and right with respect to the vehicle width direction, and on the vehicle side, there are arranged the left and right seat supporting portions 99, 99 which support the bottom plate 52s of the occupant seat 52 and on which the central seating sensors 72L, 72R abut. Therefore, if the rider D is determined as seated when the seating is detected simultaneously by the central seating sensors 72L, 72R, the accuracy of detection can be enhanced.

In the case of a so-called tandem seat, a paper-like seat switch that detects the seating of the rider on the basis of the seating load is arranged in the front seat in which the rider is seated. By using such a paper-like seat switch, it is possible to avoid a situation where the rider is erroneously detected as seated by the seating sensor when only the pillion passenger is seated in the rear seat.

By using the seating sensor that detects the seating load, only the seating of the rider is reliably detected and erroneous detection is eliminated.

However, such a sensor that detects seating on the basis of the seating load is expensive in comparison to a mechanical sensor.

In this regard, according to the present invention, the seating sensors 72F, 72L, 72R are formed so as to be common in specifications using general-purpose mechanical sensors such as contact-type switches, so the structure for detecting boarding of the rider can be made low cost.

Further, since the seating sensors 72F, 72L, 72R are arranged below the front end portion 52a of the occupant seat and below the vicinity of the central portion 52c in the longitudinal direction of the occupant seat, boarding of the rider D can be detected with reliability. This allows easy fabrication of the seat, without affecting the cushion performance.

It should be noted that one of the two central seating sensors arranged on the left and right at the longitudinally central portion of the seat may be omitted.

Further, while the seating sensors 72L, 72R are mounted to the stay members 71, 71 from the same direction with the mounting bolt 82, the seating sensors 72L, 72R may be mounted from the outside so as to be bilaterally symmetrical about the longitudinal center axis of the vehicle body.

### Industrial Applicability

The boarding detection structure for a vehicle is suitable for use in a motorcycle.

## Claims

1. Vehicle having a boarding detection structure (60) comprising:
an occupant seat (52) on which a rider (D) and a pillion passenger (P) can be seated tandem and which is formed integrally; and
seating sensors (63, 72L, 72R, 72F) that are adapted to detect seating of the rider (D),
**characterized in that**:
the seating sensors comprise a front seating sensor (72F) which is arranged below a front end portion (52a) of the occupant seat (52) and two central seating sensors (72L, 72R) which are arranged below a central portion (52c) in a longitudinal direction of the occupant seat (52), on the left and right in a vehicle width direction ; and
a bottom plate (52s) of the occupant seat (52) is provided with left and right seat supporting portions (99) on which the central seating sensors (72L,72R) abut.

2. Vehicle having a boarding detection structure (60) according to Claim 1, wherein the central seating sensors (72L, 72R) are arranged with their actuation directions oriented in a height direction of the vehicle.

3. Vehicle having a boarding detection structure according to Claim 2,
wherein: the central seating sensors (72L, 72R) are arranged on an inner side with respect to a circumferential edge portion (24P) of a storage box (24) provided below the occupant seat (52) ; and
a contact (70) of each of the central seating sensors (72L, 72R) is arranged so as to project from an opening (65) formed near the circumferential edge portion (24P).

4. Vehicle having a boarding detection structure according to Claim 3, wherein the central seating sensors (72L, 72R) are each covered by two surfaces formed by a stay member (71) to which each of the central seating sensors (72L, 72R) is mounted, and a vertical wall (24V) provided in the storage box (24).

5. Vehicle having a boarding detection structure according to any one of Claim 1 to Claim 4, wherein the three seating sensors (72F, 72L, 72R) are all contact-type switches.

## Patentansprüche

1. Fahrzeug mit einer Einstiegserkennungsstruktur (60), umfassend:
einen Insassensitz (52), auf dem ein Fahrer (D) und ein Soziusfahrer (P) hintereinander sitzen können und der einstückig ausgebildet ist; und
Sitz-Sensoren (63, 72L, 72R, 72F), die dazu ausgelegt sind, das Sich-Setzen des Fahrers (D) zu detektieren,
**dadurch gekennzeichnet, dass**:
die Sitz-Sensoren einen Vordersitz-Sensor (72F), der unterhalb eines vorderen Endbereichs (52a) des Insassensitzes (52) angeordnet ist, sowie zwei zentrale Sitz-Sensoren (72L, 72R) umfassen, die unterhalb eines zentralen Bereichs (52c) in einer Längsrichtung des Insassensitzes (52) auf der linken und rechten Seite in Richtung einer Fahrzeugbreite angeordnet sind; und
eine Bodenplatte (52) des Insassensitzes (52) mit linken und rechten Sitz-Tragebereichen (99) versehen ist, auf denen die zentralen Sitz-Sensoren (72L, 72R) ruhen.

2. Fahrzeug mit einer Einstiegserkennungsstruktur (60) nach Anspruch 1, wobei die zentralen Sitz-Sensoren (72L, 72R) so angeordnet sind, dass ihre Betätigungsrichtungen in eine Richtung der Höhe des Kraftfahrzeugs orientiert sind.

3. Fahrzeug mit einer Einstiegserkennungsstruktur nach Anspruch 2, wobei: die zentralen Sitz-Sensoren (72L, 72R) im Hinblick auf einen Umfangskantenbereich (24P) eines Ablagekastens (24), der unterhalb des Insassensitzes (52) vorgesehen ist, auf einer inneren Seite angeordnet sind; und
ein Kontakt (70) jedes der zentralen Sitz-Sensoren (72L, 72R) so angeordnet ist, dass er von einer Öffnung (65) vorsteht, die nahe dem Umfangskantenbereich (24P) ausgebildet ist.

4. Fahrzeug mit einer Einstiegserkennungsstruktur nach Anspruch 3, wobei die zentralen Sitz-Sensoren (72L, 72R) jeweils durch zwei Oberflächen, die durch ein Abstützelement (71) gebildet werden, an dem jeder der zentralen Sitz-Sensoren (72L, 72R) angebracht ist, sowie eine vertikale Wand (24V) bedeckt sind, die in dem Ablagekasten (24) vorgesehen ist.

5. Fahrzeug mit einer Einstiegserkennungsstruktur nach seinem der Ansprüche 1 bis 4, wobei die drei Sitz-Sensoren (72F, 72L, 72R) alle Kontaktschalter sind.

## Revendications

1. Véhicule rayant une structure de détection d'embarquement (60) comprenant :
un siège d'occupants (52) sur lequel un conducteur (D) et un passager (P) peuvent être assis en tandem et qui est formé de manière solidaire ; et
des capteurs d'assise (63, 72L, 72R, 72F) qui sont adaptés pour détecter l'assise du conducteur (D),
**caractérisé en ce que** :
les capteurs d'assise comprennent un capteur d'assise avant (72F) qui est agence au-dessous d'une partie d'extrémité avant (52a) du siège d'occupant (52) et deux capteurs d'assise centraux (72L, 72R) qui sont agencés au-dessous d'une partie centrale (52c) dans une direction longitudinale du siège d'occupant (52), à gauche et à droite dans le sens de la largeur du véhicule ; et
une plaque inférieure (52s) du siège d'occupant (52) est prévue avec des parties de support de siège gauche et droite (99) sur lesquelles les capteurs d' assise centraux (72L, 72R) viennent en butée.

2. Véhicule ayant une structure de détection d'embarquement (60) selon la revendication 1, dans lequel les capteurs d'assise centraux (72L, 72R) sont agencés avec leurs directions d'actionnement orientées dans une direction de hauteur du véhicule.

3. Véhicule ayant une structure de détection d'embarquement selon la revendication 2,
dans lequel : les capteurs d'assise centraux (72L, 72R) sont agencés sur une côté interne par rapport à une partie de bord circonférentiel (24P) d'une boite de stockage (24) prévue au-dessous du siège d'occupant (52) ; et
un contact (70) de chacun desdit capteurs d'assise centraux (72L, 72R) est agence afin de faire saillie d'une ouverture (65) formée à proximité de la partie de bord circonférentiel (24P).

4. Véhicule ayant une structure de détection d'embarquement selon, à revendication 3, dans lequel les capteurs d'assise centraux (72L, 72R) sont chacun recouverts par deux surfaces formées par un élément formant support (71) sur lequel chacun des capteurs d'assise centraux (72L, 72R) est monté, et une paroi verticale (24V) prévue dans la boîte de stockage (24) .

5. Véhicule ayant une structure de détection d'embarquement melon l'une quelconque des revendications 1 à 4, dans lequel les trois s capteurs d'assise (72F, 72L, 72R) sont tous des commutateurs de type à contact.
